# EUROPEAN PATENT APPLICATION

(11) **EP 4 467 324 A1**
(43) Date of publication of application: **27.11.2024**
(21) Application number: 24152500.5
(22) Date of filing: 18.01.2024
(51) Int. Cl.: B29C 65/16, B29C 65/00, B29L 31/34, B29L 31/30

(54) **CAMERA APPARATUS FOR VEHICLE AND MANUFACTURING METHOD THEREFOR**

(30) Priority: 24.05.2023 KR 20230066927
(71) Applicant: Hyundai Mobis Co., Ltd., Gangnam-gu Seoul 06141 (KR)
(72) Inventor: KIM, Ho Jung, 21125 Gyeyang-gu (KR); KIM, Hyung Min, 16891 Giheung-gu, Yongin-si (KR)
(74) Representative: Vossius & Partner Patentanwälte Rechtsanwälte mbB

(57) **Abstract**

A camera apparatus including: a unibody including a lens barrel and a front body; and a rear body coupled with the unibody, wherein the lens barrel and the front body are integrated to form one body and not separated from each other, and the unibody and the rear body are welded together by a laser beam irradiated toward the outer portion of the rear body.

## Description

### CROSS-REFERENCE TO RELATED APPLICATIONS

The present application claims priority to Patent Application No. 10-2023-0066927, filed on May 24, 2023 in Korea.

### TECHNICAL FIELD

The present disclosure relates to a camera apparatus for a vehicle and a method of manufacturing the same.

### BACKGROUND

The contents described below are merely intended to provide background information on the present disclosure and do not make up prior art.

Laser beam welding (LBW) is used to manufacture a camera for a vehicle. Specifically, the laser beam welding is used to bond a front body and a rear body of the camera.

The laser beam welding refers to a method of welding two or more parts using a laser beam. In the case of a camera in which multiple plastic housings are joined, a welding area must be above a certain level. This is to secure sufficient bonding strength.

FIG. 1 is a view of a conventional method of welding using a laser beam.

FIG. 2 is a view of light leakage occurring in a conventional camera.

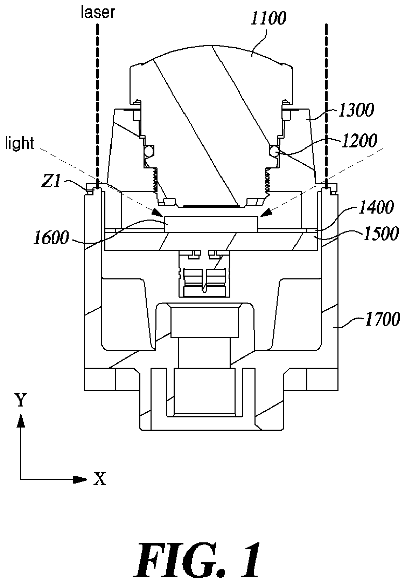

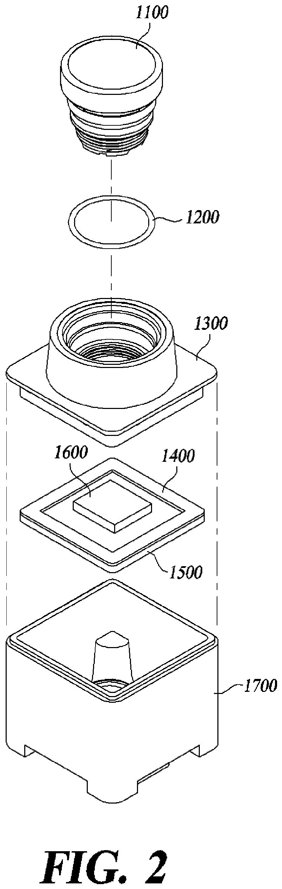

Referring to FIGS. 1 and 2, in the case of the conventional camera, a front body irradiation method is adopted, and, in other words, a laser beam is irradiated toward a front body 1300 to bond the front body 1300 and a rear body 1700. In the case of the front body irradiation method, a laser beam passes through the front body 1300 and is absorbed by the rear body 1700. The laser beam melts the rear body 1700 and the front body 1300 so that the rear body 1700 and the front body 1300 are bonded to each other.

In the case of the front body irradiation method, the front body 1300 is made of a transmissive material through which light can pass, and the rear body 1700 is made of a non-transmissive material through which light cannot pass. Since the front body 1300 is made of a transmissive material, there is a problem in that noise is generated due to light leakage.

Light leakage refers to a phenomenon in which light from an external light source reaches an image sensor 1600 after passing through the front body 1300 made of a transmissive material. When light reaches the image sensor 1600 due to light leakage, noise is generated. A conventional camera has a problem of requiring separate parts to prevent light leakage.

The conventional front body irradiation method has a problem of limiting the level of design freedom for the front body 1300. This is because when other parts are added to the front body 1300, it obstructs irradiating a laser beam to the front body 1300.

In the case of the conventional front body irradiation method, it is not possible to unify the front body 1300 and a lens barrel 1100. This is because materials of the front body 1300 and the lens barrel 1100 are different from each other. In the case of the conventional front body irradiation method, the front body 1300 is made of a transmissive material and the lens barrel 1100 is made of a non-transmissive material.

Recently, with the miniaturization of cameras, their welding area has been reduced. When a welding area is reduced, bonding strength of a camera is deteriorated. The front body irradiation method has a problem that a sufficient welding area cannot be secured.

### SUMMARY

Therefore, the purpose of the present disclosure is to prevent light leakage by adopting a rear body irradiation method.

The purpose of the present disclosure is to provide a unibody in which a lens barrel and a front body are integrated.

The purpose of the present disclosure is to eliminate unnecessary parts for the sake of shortening process time and securing cost competitiveness.

The purpose of the present disclosure is to raise the level of design freedom for a unibody and enhance the rigidity of the unibody.

The purpose of the present disclosure is to secure a wide welding area to improve bonding strength of a camera.

The purpose of the present disclosure is to lower a thermal effect of welding by using a low-power laser.

The purpose of the present disclosure is to improve bonding strength and the quality of welding between a unibody and a rear body by including a wedge.

As described above, according to the embodiments of the present disclosure, it may be possible to prevent light leakage occurring in a camara apparatus.

It may be possible to provide a unibody in which a lens barrel and a front body are integrated.

It may be possible to eliminate unnecessary parts for the sake of shortening process time and securing cost competitiveness.

It may be possible to raise the level of design freedom for a unibody and enhance the rigidity of the unibody.

It may be possible to secure a wide welding area to improve bonding strength of a camera.

It may be possible to lower a thermal effect of welding by using a low-power laser.

It may be possible to improve bonding strength and the quality of welding between a unibody and a rear body by including a wedge.

### BRIEF DESCRIPTION OF THE DRAWINGS

FIG. 1 is a view of a conventional method of welding using a laser beam.
FIG. 2 is a view of light leakage occurring in a conventional camera.

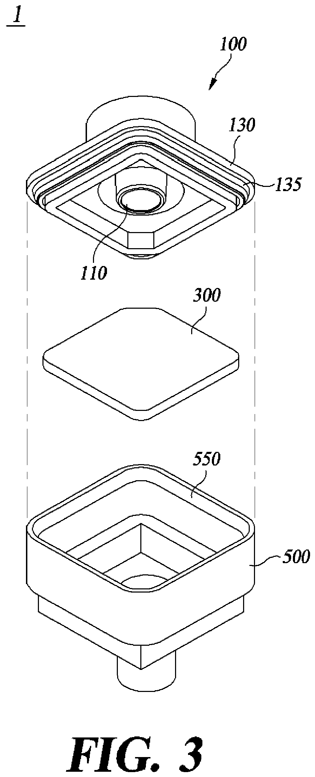

FIG. 3 is an exploded perspective view of a camera apparatus according to an embodiment of the present disclosure.

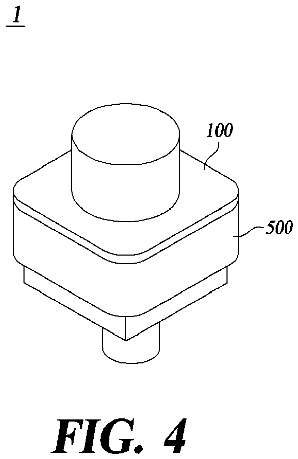

FIG. 4 is a perspective view of the camera apparatus according to an embodiment of the present disclosure.

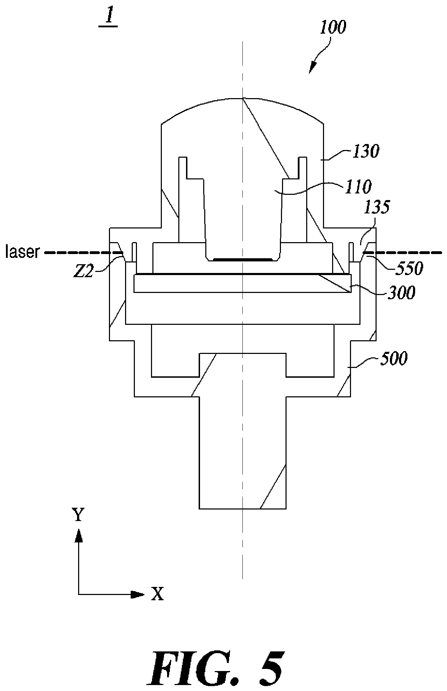

FIG. 5 is a view of a rear body irradiation method according to an embodiment of the present disclosure.

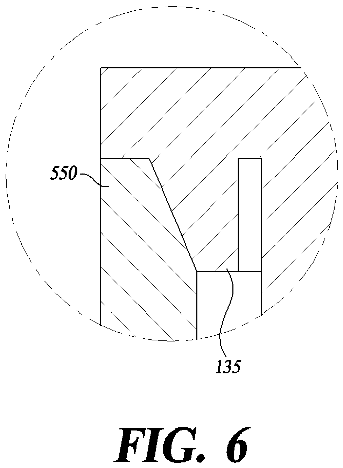

FIG. 6 is a view of a wedge unit and a wedge settling unit according to an embodiment of the present disclosure.

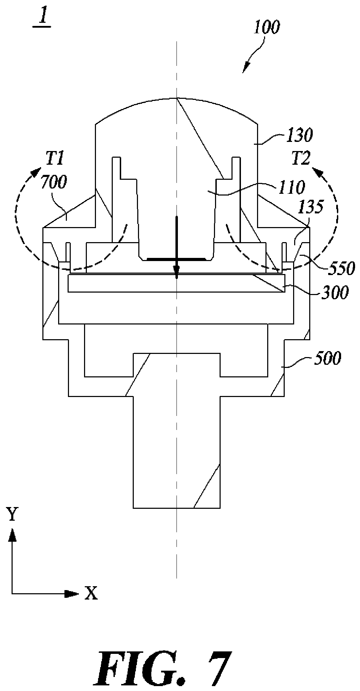

FIG. 7 is a view of a rigidity enhancing unit according to an embodiment of the present disclosure.

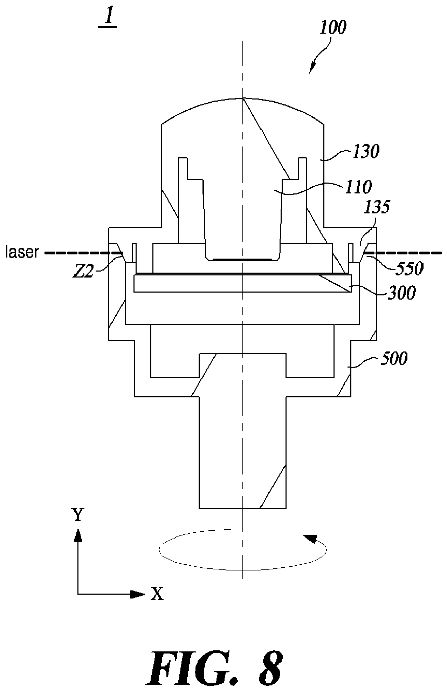

FIG. 8 is a view showing welding using a laser beam according to an embodiment of the present disclosure.

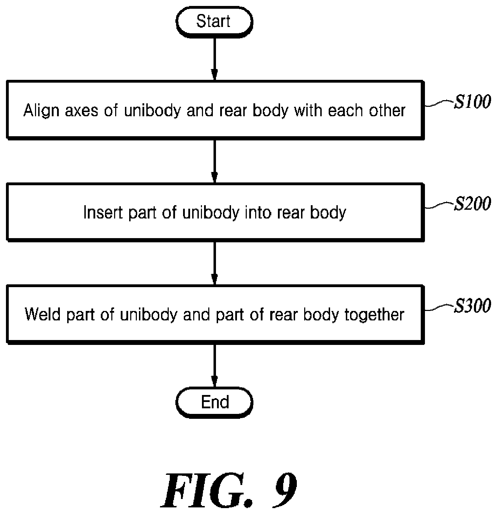

FIG. 9 is a flowchart of a method of manufacturing the camera apparatus according to an embodiment of the present disclosure.

### DETAILED DESCRIPTION

FIG. 3 is an exploded perspective view of a camera apparatus according to an embodiment of the present disclosure.

FIG. 4 is a perspective view of the camera apparatus according to an embodiment of the present disclosure.

FIG. 5 is a view of a rear body irradiation method according to an embodiment of the present disclosure.

Referring to FIGS. 3 to 5, the camera apparatus 1 according to an embodiment of the present disclosure may include all or some of a unibody 100, a printed circuit board (PCB) 300, a rear body 500, and a rigidity enhancing unit 700.

The unibody 100 may include all or some of a lens barrel 110, a front body 130, and a wedge unit 135. The lens barrel 110 and the front body 130 of the unibody 100 may be unified. That is, the lens barrel 110 and the front body 130 may form a physically indivisible body. The lens barrel 110 may be located at the center of the unibody 100. The front body 130 may extend from the lens barrel 110. The front body 130 may have a shape surrounding the lens barrel 110. A lower portion of the lens barrel 110 may have a cylindrical shape.

The unibody 100 may be combined with the rear body 500. The unibody 100 may include the wedge unit 135 on the outer portion. The wedge unit 135 may be inserted into a wedge settling unit 550 formed inside the rear body 500.

The PCB 300 may be located between the unibody 100 and the rear body 500. The PCB 300 may include various components such as an image sensor (not shown) and a passive device (not shown).

The rear body 500 may be combined with the unibody 100. The rear body 500 may include the wedge settling unit 550. The rear body 500 may have an internal space to accommodate a part of the unibody 100 and the PCB 300.

The camera apparatus 1 according to an embodiment of the present disclosure may be based on a rear body irradiation method. That is, for the camera apparatus 1 according to the present disclosure, a conventional front body irradiation method may not be adopted. In the case of adopting the rear body irradiation method, the unibody 100 may be made of a non-transmissive material. The non-transmissive material may refer to a material through which light does not pass. Since the unibody 100 of the camera apparatus 1 according to the present disclosure may not allow light to pass through, it may be possible to prevent light leakage.

The rear body irradiation method according to the present disclosure is in contrast to the conventional front body irradiation method. In the case of the conventional front body irradiation method, the front body 130 must be a transmissive material. This is because a laser beam must be absorbed by a rear body 1700 after passing through a front body 1300.

In the case of adopting the rear body irradiation method according to the present disclosure, the unibody 100 may be made of a non-transmissive material. In other words, by adopting the rear body irradiation method, it may be possible to select a material of the unibody 100 from a wide range. When selecting a material of the unibody 100, a non-transmissive material may also be selected.

The rear body irradiation method is a method of bonding the unibody 100 and the rear body 500 by irradiating a laser beam to the outer portion of the rear body 500. In the case of the rear body irradiation method, the unibody 100 may be made of a non-transmissive material, and the rear body may be made of a transmissive material. The laser beam irradiated to the outer portion of the rear body 500 may pass through the rear body 500, which is made of a transmissive material, and melt the outer portion of the unibody 100, which is made of a non-transmissive material. When the unibody 100 absorbs the laser beam and melts, a portion of the outer portion of the unibody 100 may be bonded to a portion of the inner portion of the rear body 500.

In the case of adopting the rear body irradiation method, it may be possible to prevent light leakage since the unibody 100 may be made of a non-transmissive material. In the case of a conventional camera, there is a problem in that additional components are required to prevent light leakage. Since the camera apparatus 1 according to the present disclosure may not cause light leakage, it may not require an out cover (not shown), which is a component for preventing light leakage. No light leakage may occur, resulting in no noise.

The camera apparatus 1 according to an embodiment of the present disclosure may not require an O-ring 1200. The O-ring 1200 may be unnecessary because the lens barrel 110 and the front body 130 of the unibody 100 may be integrally formed. The O-ring 1200 of a conventional camera is a rubber packing located between the lens barrel 110 and the front body 130. The elimination of the O-ring may lead to simplification of the manufacturing process and cost reduction.

The camera apparatus 1 according to an embodiment of the present disclosure may not require an adhesive (not shown) to couple the lens barrel 110 and the front body 130 to each other. This is because the unibody 100 may have a form in which the lens barrel 110 and the front body 130 already form one body. It may be impossible to separate the lens barrel 110 and the front body 130 of the unibody 100. In the case of the conventional method, a lens barrel 1100 and the front body 1300, which are separated from each other, are coupled to each other. In the case of the conventional method, an adhesive, epoxy (not shown), is used to prevent the bonding between the lens barrel 1100 and the front body 1300 from being loosened. Since the lens barrel 110 and the front body 130 of the camera apparatus 1 according to the present disclosure may be integrated, no adhesive may be required. In other words, since no adhesive may be used, the process time may be shortened and the cost may be cut down. When epoxy is not used, the process time may be reduced by 80 minutes or more because the epoxy thermal curing process is unnecessary.

A welding zone may be an area where a laser beam arrives and welding occurs. The welding point (Z1 in FIG. 1) by the conventional front body welding method and the welding point (Z2 in FIG. 5) by the rear body welding method according to the present disclosure are different from each other. Because the directions in which laser beams are irradiated are different from each other, the welding points are also different from each other (Z1 in FIG. 1 and Z2 in FIG. 5). According to an embodiment of the present disclosure, the welding point of the camera apparatus 1 may be formed at a position where the unibody 100 and the rear body 500 are in close contact with each other. That is, the welding point may be formed on the inner portion of the rear body 500 and the outer portion of the unibody 100. According to an embodiment of the present disclosure, the welding point may be formed on the wedge unit 135 and the wedge settling unit 550 that are in close contact with each other (Z2).

When the unibody 100 and the rear body 500 are made of plastic, it is advantageous to have a larger welding area. This is because bonding strength is strong when a welding area is large. The rear body welding method may have a welding area larger than that of the conventional front body welding method. This is because the area of Z2 may be larger than the area of Z1 due to the structure of the camera. Since the lens is located on the front of the camera, the space is narrow. As the welding area increases, the bonding strength of the camera apparatus 1 may become stronger. Specifically, the bonding strength between the unibody 100 and the rear body 500 may increase.

An experiment was conducted to compare the front body welding method and the rear body welding method. In the experiment, the welding area increased from 84.44 mm² to 161.22 mm², an increase of 91 %. The tensile force increased from 65 kgf to 120 kgf, an increase of 84.6 %. The camera to which the rear body welding method was applied maintained tightness even when five bar of pressure was applied. In the comparison experiment, all conditions except for the welding method were set the same.

According to an embodiment of the present disclosure, it may be possible to make the outer portion of the rear body 500 of the camera apparatus 1 thin so that welding using a relatively-low-power laser may be possible.

Conventionally, it was not possible to make the thickness of a transmissive material (i.e., the transmissive material 1300 in FIGS. 1 and 2) thinner than a certain thickness. This is because, in the case of the front body irradiation method, as the thickness of a transmissive material (i.e., the transmissive material 1300 in FIGS. 1 and 2) becomes thinner, light leakage becomes more severe.

Since the unibody 100 of the camera apparatus 1 according to the present disclosure may be made of a non-transmissive material, light leakage may not occur. Since no light leakage may be caused, there is no problem even when the thickness of the outer portion of the rear body 500 made of a transmissive material is reduced.

According to an embodiment of the present disclosure, the rear body 500 may have a thickness of 0.7 mm to 1.4 mm. When the thickness of the rear body 500 made of a transmissive material is reduced, the transmittance of a laser is increased, so that welding using a relatively-low-power laser may be possible. A heat-affected zone (HAZ) is reduced when using a low-power laser. As a result, the quality of welding may be improved and the bonding strength between the unibody 100 and the rear body 500 may be enhanced.

FIG. 6 is a view of the wedge unit and the wedge settling unit according to an embodiment of the present disclosure.

Referring to FIG. 6, the camera apparatus 1 according to the present disclosure may include the wedge unit 135 and the wedge settling unit 550. The wedge unit 135 may be located on the outer portion of the unibody 100. The wedge settling unit 550 may be located inside the rear body 500. When the unibody 100 and the rear body 500 are coupled with each other, the wedge unit 135 and the wedge settling unit 550 may be in close contact with each other. The wedge unit 135 and the wedge settling unit 550 may form a press-fit structure.

In the part where the wedge unit 135 and the wedge settling unit 550 may be in close contact with each other, when y-axis coordinates are the same, a distance from a central axis to the surface of the wedge unit 135 may be longer than a distance from the central axis to the surface of the wedge settling unit 550. That is, the circumference of the outer portion of the unibody 100 forming the wedge unit 135 may be greater than the circumference of the inner portion of the rear body 500 forming the wedge settling unit 550. When the wedge unit 135 and the wedge settling unit 550 are matched, the circumferences of the wedge unit 135 and the wedge settling unit 550 may become substantially equal to each other. The wedge unit 135 and the wedge settling unit 550 may apply pressure to each other while in close contact with each other. By the pressure applied to each other, the wedge unit 135 and the wedge settling unit 550 may be crushed until their circumferences become substantially equal to each other.

By means of the wedge unit 135 and the wedge settling unit 550, the unibody 100 and the rear body 500 may be firmly fixed to each other without shaking. When the central axis of the camera is twisted, the direction of light passing through the lens barrel 110 may be changed, so the central axis must not be twisted. The wedge unit 135 and the wedge settling unit 550 may serve to fix the central axis of the camera apparatus 1 so as not to be twisted.

When welding is performed using a laser beam, turgor pressure may be generated inside the camera apparatus 1 due to generated heat. When welding is performed using a laser beam after fixing the unibody 100 and the rear body 500 to each other using the wedge unit 135 and the wedge settling unit 550, the quality of welding may be improved. This is because the coupling between the unibody 100 and the rear body 500 may not be twisted even when turgor pressure is generated during welding using a laser beam. The camera apparatus 1 may prevent its components including the wedge unit 135 and the wedge settling unit 550 from being twisted or damaged by turgor pressure.

The shapes of the wedge unit 135 and the wedge settling unit 550 are not limited to those shown in FIG. 6. The surface of the wedge unit 135 and the surface of the wedge settling unit 550 may be parallel to the y-axis.

FIG. 7 is a view of the rigidity enhancing unit according to an embodiment of the present disclosure.

Referring to FIG. 7, the rigidity enhancing unit 700 may be positioned to surround the outer portion of the unibody. The rigidity enhancing unit 700 may serve to improve the rigidity of the unibody 100. According to an embodiment of the present disclosure, the rigidity enhancing unit 700 may be a rib.

The rigidity enhancing unit 700 may prevent warpage of the unibody 100. As shown in FIG. 7, a torque T1 or T2 may act on the unibody 100, so that the unibody 100 may warp. When the warpage occurs, the center portion of the unibody 100 may be pushed in toward the rear body 500. When the rigidity enhancing unit 700 is installed on the outer portion of the unibody 100, it may be possible to prevent the warpage caused by the torque T1 or T2.

In the case of the conventional front body irradiation method, the level of design freedom of the front body 1300 is limited. This is because the path of a laser beam is limited according to the shape of the front body 1300, and the quality of welding is thus deteriorated. For example, when another part is added to the front body 1300, it obstructs irradiating a laser beam to the front body 1300. In the case of the camera apparatus 1 according to the present disclosure, the level of design freedom may be high because the rear body irradiation method is used. For example, even when the rigidity enhancing unit 700 is installed on the unibody 100, the path of a laser beam may not be obstructed. The rigidity enhancing unit 700 may prevent the unibody 100 from warping due to turgor pressure generated during welding using a laser beam.

The shape of the rigidity enhancing unit 700 is not limited to that in FIG. 7. The rigidity enhancing unit 700 may have various shapes surrounding the unibody 100. For example, the rigidity enhancing unit 700 may be a cylinder having a hole formed in the center of the body. The cross section of the rigidity enhancing unit 700 in FIG. 8 has a triangle shape, but the cross section of the rigidity enhancing unit 700 may also have a rectangle shape or a square shape. Other various shapes are also possible.

FIG. 8 is a view showing welding using a laser beam according to an embodiment of the present disclosure.

FIG. 9 is a flowchart of a method of manufacturing the camera apparatus according to an embodiment of the present disclosure.

Referring to FIGS. 8 and 9, in the method of manufacturing the camera apparatus, the axis of the unibody 100 and the axis of the rear body 500 may be aligned with each other at S100. When an axis of a camera is twisted, it leads to the deterioration of the performance of the camera. During the entire process of manufacturing the camera apparatus 1, the central axes of the components of the camera apparatus 1 may be adjusted so as not to be twisted.

After aligning the axes of the unibody 100 and the rear body 500 with each other, a part of the unibody 100 may be inserted into the rear body 500 at S200. The unibody 100 may include the lens barrel 110 and the front body 130 that are integrated. The unibody 100 may have a structure in which the lens barrel 110 and the front body 130 form one body. Because the lens barrel 110 and the front body 130 may be made of the same material, it may be possible to make the unibody 100 in which the lens barrel 110 and the front body 130 are integrated. Since the rear body irradiation method is adopted, it may be possible to make the lens barrel 110 and the front body 130 with a non-transmissive material. In the case of the conventional front body irradiation method, since the lens barrel (the lens barrel 1100 in FIGS. 1 and 2) is made of a non-transmissive material and the front body (the front body 1300 in FIGS. 1 and 2) is made of a transmissive material, a structure in which they are integrated is impossible. After aligning the axes of the unibody 100 and the rear body 500 with each other, a part of the lower end of the unibody 100 may be inserted into the accommodating space formed inside the rear body 500.

According to one embodiment of the present disclosure, the process of inserting the unibody 100 into the rear body 500 may involve pushing the unibody 100 into the rear body 500 forcibly so that the wedge unit 135 formed on the outer portion of the unibody 100 and the wedge settling unit 550 formed on the inner portion of the rear body 500 may form a press-fit structure. By means of the wedge unit 135 and the wedge settling unit 550, the unibody 100 and the rear body 500 may be firmly fixed to each other without shaking. The wedge unit 135 and the wedge settling unit 550 may serve to fix the central axis of the camera apparatus 1 so as not to be twisted. The coupling between the unibody 100 and the rear body 500 may not be twisted even when turgor pressure is generated during welding using a laser beam.

After a part of the unibody 100 is inserted into the rear body 500, a part of the unibody 100 and a part of the rear body 500 may be welded together at S300. Apart of the unibody 100 and a part of the rear body 500 may be welded together by irradiating a laser beam to the outer portion of the rear body 500. In this case, the welding point may be formed on the inner portion of the rear body 500 and the outer portion of the unibody 100. According to an embodiment of the present disclosure, the wedge unit 135 and the wedge settling unit 550 may be melted by irradiating a laser beam to the portion Z2 where the wedge unit 135 and the wedge settling unit 550 are in close contact with each other. The melted areas may be bonded to each other.

According to an embodiment of the present disclosure, in the process of irradiating a laser beam, the laser beam may be irradiated in a direction perpendicular to the central axis of the rear body 500. The laser beam irradiated perpendicularly to the central axis of the rear body 500 may pass through the rear body 500 made of a transmissive material and then reach the unibody 100 made of a non-transmissive material. The laser beam may melt the unibody 100. The rear body 500 made of a transmissive material may also be melted by the heat generated from the unibody 100 made of a non-transmissive material. A part of the melted unibody 100 and a part of the melted rear body 500 may be bonded to each other.

A laser beam does not necessarily have to be irradiated perpendicularly to the central axis of the rear body 500. For example, it may also be possible to irradiate a laser beam so as to be inclined to the central axis of the rear body 500. According to an embodiment of the present disclosure, a laser beam may be irradiated so as to be inclined to the central axis of the rear body 500. In this case, the laser beam may be irradiated so as to reach the wedge unit 135 and the wedge settling unit 550. When adopting the rear body irradiation method, the direction of irradiating a laser beam is not limited. In the case of the conventional front body irradiation method, because the lens barrel 1100 is located in the center of the front body 1300, the direction in which a laser beam is irradiated is limited.

According to an embodiment of the present disclosure, as shown in FIG. 8, while a laser beam is irradiated to the rear body 500, the rear body 500 may be rotated in situ. Here, the axis of the in-situ rotation may correspond to the central axis of the rear body 500.

According to an embodiment of the present disclosure, welding using a laser beam may be performed with a jig. Specifically, the unibody 100 and the rear body 500 may be put into a jig. The unibody 100 and the rear body 500 put into the jig may be pressurized so that they do not warp. Welding may be performed using a laser beam while rotating the unibody 100 and the rear body 500 put into the jig.

According to an embodiment of the present disclosure, the process of performing welding using a laser beam may be a process of simultaneously irradiating a laser beam toward the entire outer circumference of the rear body 500.

According to an embodiment of the present disclosure, when a laser beam is simultaneously irradiated toward the entire outer circumference of the rear body 500, a simultaneous through transmission infrared (STTIr) welding may be used. The STTIr welding is based on infrared light. The STTIr welding is done quickly and is advantageous for residual stress.

In the flowcharts of the present disclosure, it is described that each process sequentially occurs, but this is merely an example of the technology of some embodiments of the present disclosure. In other words, a person having ordinary skills in the art to which some embodiments of the present disclosure pertain may be able to make various modifications and variations by changing the processes described in the flowcharts of the present disclosure or by undergoing one or more of the processes in parallel within the essential characteristics of some embodiments of the present disclosure, so the flowcharts of the present disclosure are not limited to a time-series order.

## Claims

1. A camera apparatus comprising:
a unibody including a lens barrel and a front body; and
a rear body coupled with the unibody,
wherein the lens barrel and the front body are integrated with each other to form one body and not separated from each other, and
the unibody and the rear body are welded together by a laser beam irradiated toward an outer portion of the rear body.

2. The camera apparatus of claim 1, wherein the unibody is made of a non-transmissive material through which a laser beam cannot pass, and the rear body is made of a transmissive material through which a laser beam can pass.

3. The camera apparatus of claim 1, or 2, wherein the unibody includes a wedge unit on an outer portion thereof, and the rear body includes a wedge settling unit on an inner portion thereof.

4. The camera apparatus of claim 3, wherein the wedge unit and the wedge settling unit are welded together by the laser beam.

5. The camera apparatus of any one of claims 1 to 4, further comprising a rigidity enhancing unit that surrounds the outer portion of the unibody and that is configured to enhance the rigidity of the unibody.

6. A method of manufacturing a camera apparatus, comprising processes of:
inserting a part of a unibody including, a lens barrel and a front body that are integrated with each other and not separated from each other, into a rear body; and
welding the part of the unibody and a part of the rear body together by irradiating a laser beam to an outer portion of the rear body.

7. The method of claim 6, wherein the inserting process includes a process of pushing the unibody into the rear body forcibly so that a wedge unit formed on an outer portion of the unibody and a wedge settling unit formed on an inner portion of the rear body form a press-fit structure.

8. The method of claim 6, or 7, wherein the laser beam is irradiated in a direction perpendicular to a central axis of the rear body.

9. The method of claim 6, 7, or 8, wherein, in the welding process, the rear body rotates in situ while the laser beam is irradiated to the rear body and the axis of the in-situ rotation of the rear body corresponds to a central axis of the rear body.

10. The method of any one of claims 6 to 9, wherein, in the welding process, a laser beam is simultaneously irradiated toward an entire outer circumference of the rear body.
